# EUROPÄISCHE PATENTSCHRIFT

(11) **EP 1 289 754 B1**
(45) Veröffentlichungstag und Bekanntmachung des Hinweises auf die Patenterteilung: **12.11.2003**
(21) Anmeldenummer: 01940502.6
(22) Anmeldetag: 18.05.2001
(51) Int. Cl.: B32B 27/12, A41D 31/02, E04H 15/54

(54) **FLEXIBLER VERBUNDSTOFF**
FLEXIBLE COMPOSITE MATERIAL
MATERIAU COMPOSITE FLEXIBLE

(30) Priorität: 29.05.2000 DE 10026403
(43) Veröffentlichungstag der Anmeldung: 12.03.2003
(73) Patentinhaber: Sympatex Technologies GmbH, 42103 Wuppertal (DE)
(72) Erfinder: BÖHRINGER, Bertram, Kurt, 42115 Wuppertal (DE); HÜRTEN, Joachim, 42349 Wuppertal (DE); SCHUSTER, Volker, 89551 Königsbraun (DE)
(74) Vertreter: Fett, Günter
(86) Internationale Anmeldenummer: EP0105713
(87) Internationale Veröffentlichungsnummer: WO01092009

(56) Entgegenhaltungen:
- EP-A- 0 541 206
- EP-A- 0 542 491
- EP-A- 0 657 279
- EP-A- 0 707 802
- WO-A-01/03919
- WO-A-94/19178
- DE-A- 4 216 659
- DE-U- 29 817 903
- US-A- 5 431 970
- US-A- 5 520 980

## Beschreibung

Die Erfindung bezieht sich auf einen flexiblen Verbundstoff zur Herstellung von wasserfesten Bekleidungsstücken, Zelten, Schlafsäcken, Schuhen und Schuhzwischenwänden oder ähnlichen im Außenbereich einsetzbaren Gegenständen, enthaltend eine Außenlage aus einem textilen Flächengebilde oder dergleichen als Oberstoff, eine hydrophile, mindestens einschichtige Membran und eine mindestens einschichtige Innenlage.
Membrangewebe dieser Art sind in zahlreichen unterschiedlichen Ausgestaltungen bekannt und haben sich in der Praxis auch bewährt.

So werden beispielsweise in der DE 298 19 703 U1 Laminate beschrieben, die aus einer wasserdichten und wasserdampfdurchlässigen Funktionsschicht und mindestens einer Lederschicht mit einer Außenseite und einer Innenseite bestehen. Die Lederschicht ist dabei offen hydrophobiert und mit ihrer Innenseite unmittelbar auf eine Seite der Funktionsschicht laminiert. Das Laminat aus der DE 298 19 703 U1 weist einen Wasserdampfdurchgangswiderstand von weniger als 600x10⁻³ (m² mbar)/W auf.

Die DE 29 54 263 C2 offenbart einen flexiblen Verbundstoff, der aus mindestens zwei aufeinanderkaschierten flexiblen porösen Schichten mit einer Wasserdampfdurchlässigkeit von über 1000 g/m² besteht. Die erste Schicht dieses Verbundstoffs ist wasserdicht mindestens bei Drücken von 1,75 kg/cm² und besteht aus einem hydrophoben Material mit einem Wasserkontaktwinkel von über 90 °. Die zweite Schicht weist eine zusammenhängende hydrophile Mikroporenstruktur auf, wobei der Wassertransport durch diese hydrophile Schicht ausschließlich durch den Absorptions-Verdampfungsmechanismus erfolgt, und die Schicht eine Sperre für den Durchgang von grenzflächenspannungsemiedrigenden Stoffen darstellt.

In der DE 39 42 879 A1 schließlich wird ein wasserdichtes, wasserdampfdurchlässiges Material für Schuhe vorgeschlagen, welches aus einer textilen Außenschicht, aus einer wasserdampfdurchlässigen, wasserdichten Sperrschicht und einer hydrophoben Innenschicht besteht.

Gewöhnlich besteht bei diesen vielseitig verwendeten, dreilagigen Verbundstoffen die Innenlage aus einem für Wasserdampf durchlässigen Futterstoff, so dass der sich zwischen dem Träger eines aus diesem Verbundstoff hergestellten Gegenstandes, beispielsweise einer Jacke, und dieser bildende Wasserdampf aufgrund des durch die Temperaturunterschiede sich ergebenden höheren Innendruckes durch den Futterstoff und die Membran nach außen diffundiert und auf der Außenlage verdunstet. Wasserperlen werden von dieser Innenlage aber nicht bzw. nur über einen längeren Zeitraum aufgenommen. Die Abführung von größeren Mengen an Flüssigkeit, die bei größerer körperlicher Anstrengung durch Schweißbildung unumgänglich ist, ist demnach oft unzureichend. Vielmehr tritt in der Innenlage ein Wasserstau auf, der bei dem Träger eines aus diesem Verbundstoff hergestellten Kleidungsstückes ein unangenehmes Nässegefühl hervorruft und auch zu Erkältungen führen kann.

Aufgabe der Erfindung ist es daher, einen flexiblen Verbundstoff der eingangs beschriebenen Gattung in der Weise auszubilden, dass mittels des Verbundstoffes nicht nur Wasserdampf in kurzer Zeit von innen nach außen zu transportieren ist, sondern dass vor allem auch Flüssigkeiten rasch nach außen abgeführt werden können. Außer den Eigenschaften, atmungsaktiv und winddicht zu sein, die weitgehend auf die hydrophile Membran zurückzuführen sind, sollen auch Flüssigkeiten, wie insbesondere Wasser, sofort von der innenlage aufgenommen und über die Membran in die Außenlage abgeleitet werden. Der dazu erforderliche Material- und Fertigungsaufwand soll gering gehalten werden, dennoch soll eine außerordentliche gute Funktionsweise, insbesondere in bezug auf die Abführung von Flüssigkeit, gegeben sein.

Gemäß der Erfindung wird dies bei einem flexiblen Verbundstoff der eingangs genannten Art dadurch erreicht, dass die Innenlage eine Eindringzeit für Wassertropfen, gemessen gemäß Tropfendissipationstest nach AATCC 79-1992, von weniger als 10 sec, bevorzugt weniger als 5 sec, noch bevorzugter weniger als 2 sec, und eine Ausbreitung für Wassertropfen in Längs - und Querrichtung von mindestens 15 mm, aufweist.

Dieser Dissipationstest ist ein von der American Association of Textile Chemists and Colorists (AATCC, Research Triangle Park, North Carolina, USA) im Jahre 1954 entwickelter und in der Folgezeit mehrfach überarbeiteter Test und dient der Ermittlung der Benetzbarkeit und Absorptionsfähigkeit gegenüber Wasser. Eine Beschreibung dazu findet sich beispielsweise im US Patent 4,191,221. Die im Rahmen der vorliegenden Erfindung benutzte Testvorschrift ist die Version aus dem Jahre 1992. Im Prinzip erfolgt die Messung durch einen Wassertropfen, der aus einer bestimmten Höhe auf die gestraffte Oberfläche der zu untersuchenden Probe fallengelassen wird. Dabei wird die Zeit gemessen, die der Tropfen braucht, um von der Probe absorbiert zu werden, also von der Oberfläche zu verschwinden.
Sehr gut absorbierende Proben nehmen den Wassertropfen praktisch sofort, d.h. innerhalb von höchstens 1 bis 2 sec nach dem Kontaktieren der Oberfläche, auf. Im Rahmen der vorliegenden Erfindung gilt eine Absorptionszeit von bis zu 10 sec noch als ausreichend, Absorptionszeiten von größer als 10 sec beim Tropfendissipationstest gelten hingegen im allgemeinen als nicht mehr zufriedenstellend.
Der Tropfendissipationstest erlaubt daneben noch die Ermittlung einer weiteren Messgröße zur Beurteilung der Saugfähigkeit der Innenlage. Neben der vorstehend beschrieben Messung der Eindringzeit, kann auch die Ausbreitung des Tropfens in Längs- und Querrichtung bestimmt werden. Erfindungsgemäße Verbundstoffe enthalten Innenlagen, bei denen die Ausbreitung des Tropfens in Längs- und Querrichtung bei mindestens 15 mm, bevorzugt bei mindestens 20 mm, liegt. Als außerordentlich gut geeignet werden Materialien für die Innenlage angesehen, deren Ausbreitungsgrößen oberhalb von etwa 30 mm in Längs- und Querrichtung liegen.

Eine weitere Testmöglichkeit für die Absorptions- oder Saugfähigkeit wird dem Fachmann durch die DIN 53924 "Bestimmung der Sauggeschwindigkeit von textilen Flächengebilden gegenüber Wasser" an die Hand gegeben. Diese Prüfung dient gleichfalls zur Bestimmung der Geschwindigkeit, mit der textile Flächengebilde Wasser aufsaugen. Bei diesem Test werden Messproben von etwa 250 mm Länge und 30 mm Breite in Längs- und Querrichtung (bei Geweben in Kett- und Schussrichtung) entnommen und senkrecht in eine Messeinheit mit destilliertem Wasser gebracht. Die Steighöhe des Wassers in der Probe wird beobachtet und z.B. nach 5, 10, 30, 60, 300, 600, 900 und/oder 1800 s an Messstäben abgelesen.
Erfindungsgemäße Verbundstoffe enthalten Innenlagen, bei denen die Steighöhe des Tropfens nach 5 sec bei mindestens 10 mm, bevorzugt mindestens 15 mm, liegt. Die Steighöhe nach 1800 sec liegt bei diesen Materialien bei mindestens 70 mm, bevorzugt bei mindestens 100 mm.
Im Unterschied zu der Tropfendissipationsmethode, gehen bei der zuletzt beschriebenen Testmethode nach DIN 53924 in das Ergebnis auch Größen ein, die sich z.B. auf den Gewebeaufbau der zu untersuchenden Probe beziehen (Kapillareigenschaften). Werden diese - dem Fachmann bekannten Eigenschaften - bei der Beurteilung und Auswertung der Messergebnisse berücksichtigt, so wird der Fachperson durch die DIN 53924 ein weiteres Beurteilungscharakteristikum zur Verfügung gestellt.

Es hat sich herausgestellt, dass dann besonders vorteilhafte Ergebnisse erzielt werden, wenn die mindestens einschichtige Innenlage des erfindungsgemäßen Verbundstoff aus einem textilen Flächengebilde mit geringer Grenzflächenspannung in bezug auf Wasser, einer mikroporöse Polyurethanschicht, einem Vliesstoff, einer Schaumstoffschicht oder Kombinationen daraus besteht.
Die Auswahl dieser für die Innenlage einzusetzenden Materialien kann der Fachmann mittels einfacher Routineversuche treffen. Zur Bestimmung ihrer Eignung sind die oben beschriebenen Meßmethoden heranzuziehen, wobei unter "geringer Grenzflächenspannung" beispielsweise die Lage der Messergebisse in den oben genannten bevorzugten Bereichen zu verstehen ist.

Es ist selbstverständlich auch möglich, die Hydrophilie der Innenlage durch Ausrüstung oder entsprechende Behandlung einzustellen. So können z.B. geeignete Innenlagen durch Ausrüstung von textilen Flächengeweben, die für sich keine ausreichende Absorptionsfähigkeit z.B. zu Wasser aufweisen, durch Ausrüstung mit beispielsweise Polyurethanverbindungen, erhalten werden. Derartige Produkte sind dem Fachmann geläufig und bedürfen keiner weiteren Erläuterung an dieser Stelle. Hinweise zur Hydrophilierung können auch der US-Patentschrift 5,855,623 entnommen werden. Ob eine solche Beschichtung die nach innen weisende Seite oder die nach außen, also Richtung Membran, weisende Seite oder gar beide Seiten der Innenlage bildet, ist dabei prinzipiell keinen Beschränkungen unterworfen und kann lediglich durch Gründe der Kosten, des Tragekomforts oder der Zweckmäßigkeit beeinflusst werden.

Um den Effekt des Wasserabführung weiter zu steigern, kann es vorteilhaft sein, dass die Membran des Verbundstoffes zwei Schichten aufweist und dass die der Innenlage des Verbundstoffes zugekehrte Schicht hydrophil reagierend ausgebildet ist. Diese Maßnahme führt dazu, dass die Feuchtigkeit noch rascher in Richtung Membran und damit nach außen abgeleitet wird. In vorteilhafter Weise kann dieses z.B. dadurch geschehen, dass eine hydrophile Schichtauflage auf die Membran gebracht wird. Eine solche hydrophile Schichtauflage könnte z.B. ebenfalls aus einer Polyurethanschicht mit geringer Grenzflächenspannung in bezug auf Wasser bestehen. Es könnte z.B., sofern erwünscht oder angebracht, die gleiche Polyurethanschicht sowohl in der Innenlage als auch zur weiteren Beschichtung der Membran eingesetzt werden.

Für den flexibler Verbundstoff gemäß der vorliegenden Erfindung sind beispielsweise hydrophile Membranen aus Polyurethan, Polyetheramid oder Polyetheresteramid oder Kombinationen daraus sehr geeignet. Solche Membranen sind bekannt. Beispiele dafür sind in der EP 827561, der EP 378015 oder in der JP 6-73669 zu finden.

Ganz besonders bevorzugt wird es allerdings, wenn die hydrophile Membran aus einem Copolyetherester hergestellt ist. In dieser Ausführungsform ist die Membran des erfindungsgemäßen Verbundstoffes ein Polymer, das sich von längerkettigen Polyglykolen, kurzkettigen Glykolen mit 2 bis 4 Kohlenstoffatomen und Dicarbonsäuren ableitet, wobei vorzugsweise die Polymere Copolyetherester sind, die aus einer Vielzahl von wiederholenden, intralinearen langkettigen und kurzkettigen Estereinheiten bestehen, die statistisch über Esterbindungen Kopf an Schwanz verknüpft sind. Derartige Membranen sind dem Fachmann gleichfalls bekannt und beispielsweise in der EP 178740, der EP 365129 und EP 827561 beschrieben.

Der die Außenlage bildende Oberstoff ist in zahlreichen Ausführungsformen ein textiles Flächengewebe, wobei das dafür eingesetzte Material in weiteren Grenzen variiert werden kann. Bevorzugt sind für die meisten Einsatzgebote Oberstoffe aus Polyester und/oder Polyamid.

In einer weiteren bevorzugten Ausführungsform besteht der die Außenlage des Verbundstoffes bildende Oberstoff aus Leder. Ein solcher erfindungsgemäßer Verbundstoff ist dann z.B. besonders für den Einsatz bei der Herstellung von Schuhen geeignet.

Es ist hinsichtlich der Verarbeitung für den erfindungsgemäßen Verbundstoff bevorzugt, dass die mindestens einschichtige Innenlage ganz oder teilweise oder nur in den Randbereichen eines Bekleidungsstückes oder eines anderen Gegenstandes mit der Membran verbunden, beispielsweise verklebt oder vernäht, ist. Wird vernäht, so ist darauf zu achten, dass die Naht in geeigneter Weise gegen von außen eindringende Flüssigkeit abgedichtet wird.

Bevorzugte flexible Verbundstoffe sind dreilagig und enthalten von außen nach innen betrachtet zunächst den Oberstoff, dann die hydrophile Membran und daran anschließend die Innenlage.

Wird ein flexibler Verbundstoff gemäß der Erfindung ausgebildet, so ist nicht nur ein von außen wasserdichtes und von innen wasserdampfdurchlässiges textiles Flächengebilde, das in äußerst vielseitiger Weise verwendet werden kann, geschaffen, sondern vor allem ist gewährleistet, dass auch größere Mengen an Flüssigkeit, und zwar in Form von Wassertropfen, in sehr kurzer Zeit von innen nach außen transportiert werden. Die Innenlage in dem erfindungsgemäßen Verbundstoff nimmt nämlich in einem erheblichen Maße Feuchtigkeit auf und verteilt diese in kurzer Zeit über einen größeren Bereich, so dass ein Wassertropfen, der sich auf der Innenlage niederschlägt, sofort aufgesogen wird und auf deren Oberfläche nicht mehr sichtbar ist. Und da die auf der Innenseite des Verbundstoffes anfallende Flüssigkeit somit großflächig der hydrophilen Membran zugeführt wird, kann die Feuchtigkeit auch rasch diese durchdringen und in die Außenlage gelangen, aus der die Feuchtigkeit großflächig in die Atmosphäre abgegeben wird.

Mit sehr geringem Materialaufwand, aber aufgrund der Erkenntnis, die Innenlage zur in der beschriebenen Form zur Aufnahme und Verteilung von tropfenförmig anfallender Feuchtigkeit auszubilden, ist somit ein flexibler Verbundstoff geschaffen, der äußerst vielseitig und vorteilhaft einsetzbar ist und der einen raschen Abtransport von der Innenlage zugeführter Flüssigkeit ermöglicht. Wassertropfen werden dabei sofort. aufgenommen, Wasserflecken entstehen demnach nicht oder sind zumindestens praktisch nicht sichtbar, so dass auch ein optisch ansprechender und leicht zu verarbeitender Verbundstoff gegeben ist.

## Patentansprüche

1. Flexibler Verbundstoff zur Herstellung von wasserfesten Bekleidungsstükken, Zelten, Schlafsäcken, Schuhen und Schuhzwischenwänden oder ähnlichen im Außenbereich einsetzbaren Gegenständen, enthaltend eine Außenlage aus einem textilen Flächengebilde oder dergleichen als Oberstoff, eine hydrophile, mindestens einschichtige Membran und eine mindestens einschichtige Innenlage, **dadurch gekennzeichnet, dass** die Innenlage eine Eindringzeit für Wassertropfen von weniger als 10 sec und eine Ausbreitung für Wassertropfen in Längs- und Querrichtung von mindestens 15 mm aufweist, jeweils gemessen gemäß Tropfendissipationstest nach AATCC 79-1992.

2. Flexibler Verbundstoff nach Anspruch 1, **dadurch gekennzeichnet, dass** die Innenlage eine Eindringzeit für Wassertropfen, gemessen gemäß Tropfendissipationstest nach AATCC 79-1992, von weniger als 5 sec aufweist.

3. Flexibler Verbundstoff nach Anspruch 1 oder 2, **dadurch gekennzeichnet, dass** die mindestens einschichtige Innenlage durch ein textiles Flächengebilde mit geringer Grenzflächenspannung in bezug auf Wasser, eine mikroporöse Polyurethanschicht, einen Vliesstoff, eine Schaumstoffschicht oder Kombinationen daraus gebildet ist.

4. Flexibler Verbundstoff nach einem oder mehreren der Ansprüche 1 bis 3 **dadurch gekennzeichnet, dass** die Membran des Verbundstoffes zwei Schichten aufweist und dass die der Innenlage des Verbundstoffes zugekehrte Schicht hydrophil reagierend ausgebildet ist.

5. Flexibler Verbundstoff nach einem oder mehreren der Ansprüche 1 bis 4, **dadurch gekennzeichnet, dass** die hydrophile Schichtauflage der Membran aus einer Polyurethanschicht mit geringer Grenzflächenspannung in bezug auf Wasser besteht.

6. Flexibler Verbundstoff nach einem oder mehreren der Ansprüche 1 bis 5 **dadurch gekennzeichnet, dass** die hydrophile Membran aus Polyurethan, Polyetheramid oder Polyetheresteramid oder Kombinationen daraus hergestellt ist.

7. Flexibler Verbundstoff nach einem oder mehreren der Ansprüche 1 bis 5 **dadurch gekennzeichnet, dass** die hydrophile Membran aus Copolyetherester hergestellt ist.

8. Flexibler Verbundstoff nach einem oder mehreren der Ansprüche 1 bis 7 **dadurch gekennzeichnet, dass** der die Außenlage des Verbundstoffes bildende Oberstoff aus Leder besteht.

9. Verbundstoff nach einem oder mehreren der Ansprüche 1 bis 8, **dadurch gekennzeichnet, dass** die mindestens einschichtige Innenlage ganz oder teilweise oder nur in den Randbereichen eines Bekleidungsstückes oder eines anderen Gegenstandes mit der Membran verbunden, beispielsweise verklebt oder vernäht, ist.

## Claims

1. A flexible composite material for production of waterproof clothing, tents, sleeping bags, shoes and shoe partitions or similar articles for outdoor use, containing an outer layer made of a textile fabric or similar as the outer material, a hydrophilic membrane comprising at least one layer, and an inner layer comprising at least one layer, **characterised in that** the inner layer has a penetration time for water drops of less than 10 seconds and that spreading for water drops in the longitudinal and transverse directions is at least 15 mm, measured in each case by the drop dissipation test in accordance with AATCC 79-1992.

2. Flexible composite material according to Claim 1, **characterised in that** the inner layer has a penetration time for water drops of less than 5 sec, as measured by the drop dissipation test in accordance with AATCC 79-1992.

3. Flexible composite material according to Claim 1 or 2, **characterised in that** the inner layer comprising at least one layer is formed from a textile fabric of low interfacial tension in relation to water, a microporous polyurethane layer, a nonwoven fabric, a foam layer, or combinations thereof.

4. Flexible composite material according to one or more of Claims 1 to 3, **characterised in that** the membrane of the composite material has two layers, and that the layer facing the inner layer of the composite material is structured so as to react hydrophilically.

5. Flexible composite material according to one or more of Claims 1 to 4, **characterised in that** the coating of the hydrophilic layer of the membrane consists of a polyurethane layer of low interfacial tension in relation to water.

6. Flexible composite material according to one or more of Claims 1 to 5, **characterised in that** the hydrophilic membrane is made of polyurethane, polyetheramide, or polyesteramide, or combinations thereof.

7. Flexible composite material according to one or more of Claims 1 to 5, **characterised in that** the hydrophilic membrane is made from copolyetheresters.

8. Flexible composite material according to one or more of Claims 1 to 7, **characterised in that** the material forming the outer layer of the composite material consists of leather.

9. Flexible composite material according to one or more of Claims 1 to 8, **characterised in that** the inner layer consisting of at least one layer is attached to the membrane, e.g. glued or sewn, either partly or wholly or only in the areas at the edges of an article of clothing or other object.

## Revendications

1. Matériau composite flexible pour la fabrication de pièces d'habillement, de tentes, de sacs de couchage, de chaussures et de parois intermédiaires de chaussures ou d'objets similaires utilisables à l'extérieur et étanches à l'eau, qui contient une couche extérieure en textile à surface structurée ou similaire comme matériau de dessus, une membrane hydrophile comptant au moins une couche, et au moins une couche intérieure, **caractérisé en ce que** la couche intérieure présente une durée de pénétration des gouttes d'eau inférieure à 10 s, et une diffusion des gouttes d'eau dans la direction longitudinale et la direction transversale d'au moins 15 mm, ces deux paramètres étant mesurés par le test de dissipation de gouttes selon AATCC 79-1992.

2. Matériau composite flexible selon la revendication 1, **caractérisé en ce que** la couche intérieure présente une durée de pénétration des gouttes d'eau, mesurée par le test de dissipation de gouttes selon AATCC 79-1992, inférieure à 5 s.

3. Matériau composite flexible selon la revendication 1 ou 2, **caractérisé en ce que** la couche intérieure monocouche au moins présente, est constituée d'un produit textile plat présentant une faible tension superficielle vis-à-vis de l'eau, une couche de polyuréthane microporeuse, un feutre, une couche de mousse ou des combinaisons de ceux-ci.

4. Matériau composite flexible selon l'une ou plusieurs des revendications 1 à 3, **caractérisé en ce que** la membrane du matériau composite présente deux couches et **en ce que** la couche située du côté de la couche intérieure du matériau composite est réalisée pour réagir de manière hydrophile.

5. Matériau composite flexible selon l'une ou plusieurs des revendications 1 à 4, **caractérisé en ce que** la couche hydrophile de la membrane est constituée d'une couche de polyuréthane qui présente une faible tension superficielle vis-à-vis de l'eau.

6. Matériau composite flexible selon l'une ou plusieurs des revendications 1 à 5, **caractérisé en ce que** la membrane hydrophile est réalisée en polyuréthane, en polyétheramide ou en polyétheresteramide, ou en des combinaisons de ceux-ci.

7. Matériau composite flexible selon l'une ou plusieurs des revendications 1 à 5, **caractérisé en ce que** la membrane hydrophile est constituée d'un copolyétherester.

8. Matériau composite flexible selon l'une ou plusieurs des revendications 1 à 7, **caractérisé en ce que** le matériau de dessus, qui forme la couche extérieure du matériau composite, est réalisée en cuir.

9. Matériau composite selon l'une ou plusieurs des revendications 1 à 8, **caractérisé en ce que** la couche intérieure monocouche au moins présente, est reliée à la membrane, totalement, partiellement ou uniquement sur les bordures d'une pièce d'habillement ou d'un autre objet, par exemple par collage ou couture.
